Europäisches Patentamt

European Patent Office

Office européen des brevets

(11) Publication number: **0 270 862**
**A2**

## (12) EUROPEAN PATENT APPLICATION

(21) Application number: 87116615.3

(22) Date of filing: 10.11.87

(51) Int. Cl.⁴: **G01N 21/39 , G01S 17/88**

(30) Priority: 10.11.86 GB 8626751

(43) Date of publication of application:
**15.06.88 Bulletin 88/24**

(84) Designated Contracting States:
**AT BE CH DE ES FR GB GR IT LI LU NL SE**

(71) Applicant: **Commission of the European Communities**
**Bat J Monnet Plateau du Kirchberg**
**L-2920 Luxembourg(LU)**

(72) Inventor: **Van Dijk, Johannes Wilhelmus**
**36 River View Avenue**
**North Ferriby North Humberside, HU14 3DT(GB)**

(74) Representative: **Oulton, Richard John**
**R.J. OULTON & CO. 22 Whitefriargate**
**Huil North Humberside HU1 2EX(GB)**

(54) Method determining a parameter of a medium using a laser beam.

(57) The invention in exemplary, differential absorption laser (DIAL) application, entails determining the number density "N" in an atmosphere column of a constituent whose absorbance is indicative of the value of "N", by use of first of the relationship:-

$$\ell n \frac{P\ OFF}{P\ ON} = 2N\ (\sigma\ OFF - \sigma\ ON)\ \times\ Z,$$

to establish an assumed correct value for "N" (a first value for (σ OFF - σ ON) being obtained from known data) at arbitrarily chosen "OFF" and "ON" frequencies, thereafter using that value of "N" to determine further values of (σ OFF - σ ON) at further "OFF" and "ON" frequencies until a value therefor is detained which is constant or near constant, and then, using that value, re-calculating "N" by the further relationship:-
2N(σ OFF -σON) x Z = 1.1 >
where Z is the range, and
σ OFF and σ ON = the absorbance cross-section for one molecule of the constituent in the column at the respective "OFF" and "ON" frequencies. The technique is also employed to effect a range cell determination as such to effect a range intervening column using appropriate further relationships. It may also be used to determine a parameter other than "N".

Fig 17a

Fig 17b

"IMPROVEMENTS IN OR RELATING TO LASERS"

The present invention relates to method of effecting with a laser determinations dependent upon absorbence or reflection of the laser beam;

Such use of a laser as in DIAL (Differential Absorption Laser) applications, is well known, but it is considered that current techniques fail to optimise the determination made.

It is an object of the present invention to provide such a method in which the determination made can be optimised.

There is provided by the present invention a method of effecting a determination of a parameter (hereinafter called the first parameter) of a medium the absorbence or reflection of which in respect of the laser beam is indicative of the value of the first parameter and is most indicative of that value at a particular laser output characteristic, that is, output power and/or frequency; the first parameter along with a further parameter the true value of which indicates the optimum

- 2 -

characteristic of the laser output, being indicative of the power of the reflected laser beam, characterised in that, a value is assumed for said further parameter and a laser operation effected to permit a value for the first parameter to be calculated; thereafter, using the calculated value of the first parameter as an assumed correct value, effecting a plurality of laser operations at different laser output characteristics and re-calculating the further parameter after each operation until a constant or near constant value is achieved, and then using that value of the further parameter to recalculate the first parameter to give a final value thereof on the assumption that said value of said further parameter is achieved by the optimum laser output.

In a DIAL application of the invention for remotely determining a parameter being the first parameter of an atmosphere comprising a constituent the degree of absorbence of which in respect of the laser beam is indicative of the value of that parameter, the method of the invention is characterised in that the determination is effected by reference to the relationship:

$$\ell_n \frac{P\ OFF}{P\ ON} = 2N\ (\gamma\ OFF - \gamma ON) \times Z$$

in order to establish the assumed correct value of the first parameter and subsequent values of the term $(\gamma OFF - \gamma ON)$ being the further parameter, and the relationship:-

$$2N \times (\gamma off - \gamma o_u) \times Z = 1.1$$

for a column content determination and $2N\ (\gamma OFF - \gamma ON) \triangle Z = 1.3$ for a range resolved cell determination, and for a range cell determined through an intervening column,

$$\frac{[1 + exp\ (2E_{(z+\triangle z)})]}{E^2_{(z+\triangle z)}} \times \left(\frac{S}{N}\right)^{-2} + \frac{[1 + exp\ (2E_{(z)})]}{E^2_{(z)}} \times \left(\frac{S}{N}\right)^{-2} = 0,$$

to establish the final value of said first parameter wherein:- $\sqrt{}$ OFF; $\sqrt{}$ ON = the absorbence cross section for one molecule of the constituent at the respective "OFF" and "ON" DIAL frequencies;

E = the extinction or absorbence of the constituient concerned

N = the number of density of the constituent in the sampled atmosphere volume; and

Z is the range and $\triangle Z$ is the range increment or cell dimension in the direction of the laser beam.

The parameter to be determined may for instance "N" and the further parameter " $\triangleleft$ ". The laser employed is preferably a continuously tunable, high pressure, multi-atmosphere laser, but other lasers may be employed; and indeed separate lasers may be employed in the DIAL application to provide the "ON" and "OFF" frequencies.

The present invention will now be described in the context of a discussion of the DIAL technique and with reference to the accompanying drawings, in which:-

Figures 1 to 6      respectively are absorbence spectra of 03, CO2 and H20 under specified conditions;

Figures 7 to 16    inclusive show in detail the spectra of all the 3 species to which figures 1 to 6 refer centred on certain laser times.

Figure 17_a        is a schematic of a typical single ended Dial sensor;

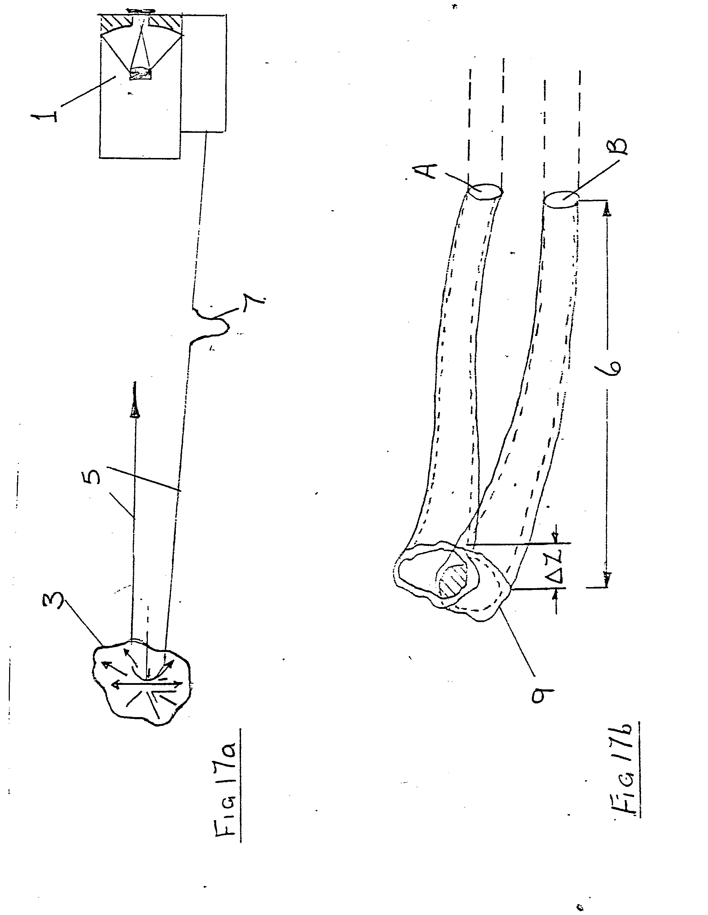

Figure 17_b        diagrammatically represents a DIAL application in which the "ON" and "OFF resonance frequencies are not formed at the same time and do not necessarily follow the same path.

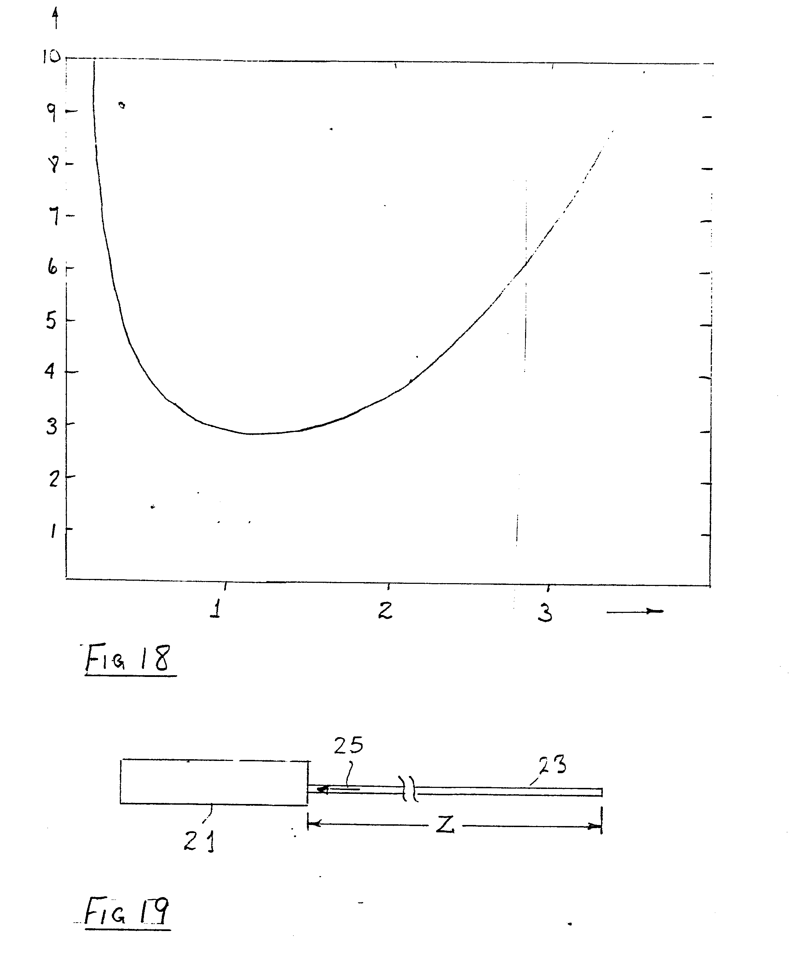

Figure 18          is a graph depicting a relative extinction error against the extinction per se;      and

- 4 -

Figure 19          is a diagrammatic illustration of a DIAL air column determination.

The differential absorption techniques uses two complementary transmitting laser frequencies, the so called "ON" resonance frequency and "OFF" resonance frequency.  The light pulses are sequentially or simultaneously transmitted along  a path in the atmosphere.  The difference between the attenuation for the "ON" and "OFF" frequencies can be used to estimate the concentration of say, a pollutant.  This specification reviews the relevant interactions of light with the atmosphere, introduces the key frequency transmitter requirements and shows the range capabilities of a 100 mJ pulsed $CO2$ laser.

Because ozone absorption spectra at sea level are broadcast and the stratospheric absorption spectra have a much more detailed line structure, these absorption spectra may be used as a basis to illustrate the comparison between a continuous tunable and line tunable $CO2$ laser for these two types of spectra.

The attenuation of a monochromatic optical beam is usually described by Lambert's law which states that the ratio of its intensity at distance Z to that at the outset is

$$T_{(z)} = \frac{I(z)}{I(o)} = \exp\left[-\int_{o}^{z} \alpha_{(z)} \, dz\right] \qquad [2.2]$$

Absorption of electromagnetic radiation is caused by the excitation of molecules into higher states of rotation and vibration.  A predominant atmospheric window occurs in the infrared between the 7.5 and $14\mu$m region of the spectra.  Here the spectrum is made up of literally thousands of narrow rotational absorption bands.  Each molecular species has its own characteristic band and lines.  Atomic or molecular absorption lines are characterised by their transition frequency $\nu$o , line strength  S and lineshape $\alpha$.      The

absorption cross section $\mathcal{T}_{abs(\nu)}$ for a single transition at some frequency is:

$$\mathcal{T}_{abs(\nu)} = S_{(\nu,T)} \times \mathcal{Y}_{abs}(\nu - \nu_o) \qquad [2.3]$$

where $\mathcal{Y}_{abs}(\nu - \nu_o)$ is the normalized lineshape function. For monochromatic light, the attenuation coefficient due to absorption of a single specimen is:

$$\alpha_{abs} = N \ mol \ \mathcal{T}_{abs} \qquad [2.4]$$

where N mol is the number density of the absorbing molecule. When several species have to be considered, the absorption cross section is the sum of the contributions from each line.

The line strength $S_{(\nu,T)}$ determined for a Boltzman distribution and a partition function $Q_{(T)}$ is given by :

$$S_{(\nu,T)} = S_{(T_o)} \times Q_{(T)} \times exp[1.44 \ E \times (\frac{1}{T_o} - \frac{1}{T})] \qquad [2.5]$$

Here $S_{(T_o)}$ is the line strength at reference temperature $T_o$. E" is the lower state of the transition (expressed as frequency ) in cm -1 and T is the ambient temperature, T and $T_o$ are in Kelvin. The partition function $Q_{(T)}$ can be approximated as

$$Q_{(\nu)} = (\frac{T}{T_o})^m \qquad [2.6]$$

where m is a molecular constant and could take values

$>1 \ -< 1.5$

At $10 \ \mu$ m where the Doppler broadening is negligible at pressures P$>$140 m bar, the broadening is caused by the interruption of the absorption process by the collision of neighbouring molecules. Here the lineshape is given by:

$$\gamma_{obs}(\nu) = \frac{\gamma_P}{(\nu-\nu_c)^2 + \gamma_P^2} \times \frac{1}{\pi} \qquad [2.7]$$

$\gamma_P$ is the half width at half maximum. It is a function of pressure and temperature.

$$\gamma_P = \gamma_0 \frac{P}{P_0} \times \left(\frac{T}{T_0}\right)^m \qquad [2.8]$$

where: Po = standard pressure

P = ambient pressure

$\gamma_c$ = collisional half width at standard conditions.

In practise m ( > 0.5 - < 1.0 ) is a quantity which depends on the molecule type and transition.

On the line centre $(\nu = \nu_0)$ the absorption cross section for a Lorentz broadened line is :

$$\sigma_{obs}(\nu) = \frac{S(\nu, T)}{\pi \gamma_P (P, T)} \qquad [2.9]$$

At the CO2 laser wavelengths between 9 $\mu$ m and 11 $\mu$ m an "atmospheric window" exists, where light is transmitted through the atmosphere with little absorption. This is apparent for example from photographs of solar radiation as seen from the earth's surface. Water vapour and carbon dioxide are the most significant absorbing gases in this infrared region.

As described above the DIAL system depends on comparing atmospheric transmission at the "ON" and "OFF" frequencies for the target pollutant. The difference in absorption due to both target pollutant and background species (interference) at the "ON" and "OFF" frequencies, as indicated, may be taken as criteria to compare the line (TEA) and continuous tunable

multi-atmospheric CO2 lasers. The parameters for numerous species have been determined and collected in the so called AFCRL line parameter compilation, which provide the four parameters $V_o$, $S_o$, $\chi$ the lower energy state E" and the partition functions listed.

To illustrate this point, this section gives an example of the interference generated by CO2 and H2O which are able to influence the absorption on the recommended ozone lines in the P branch of a discrete tuneable CO2 laser. The spectra are generated with a computer code (see reference mentioned below) which takes into account the above pressure and temperature dependence. The three species contribute to the attenuation coefficient in the wavelength region of interest. The calculations for the attenuation are done at sea level (P = 1000 mbar, T = 300 K ) and for the lower troposphere at 11 km. height (P = 200 mbar, T = 230 K). The characteristic values for P.T. and the molecular abundances are taken from the prior art. The reference mentioned above is LIDAR ALGORITHM - generation of absorbence spectra using the AFCRL-TR-730096 tapes and codes (1973).

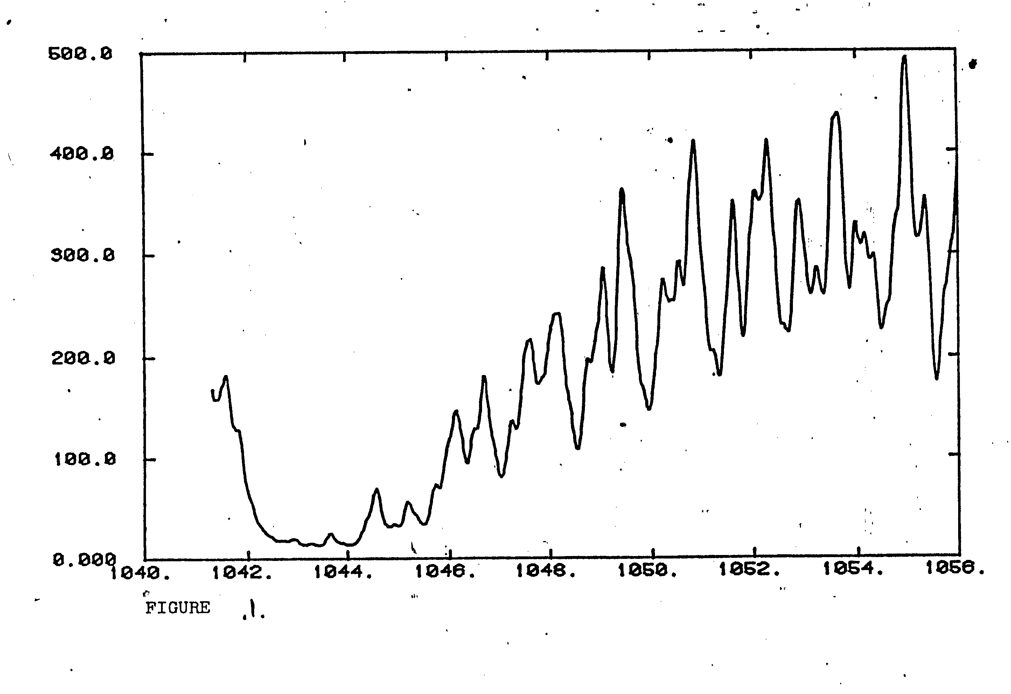

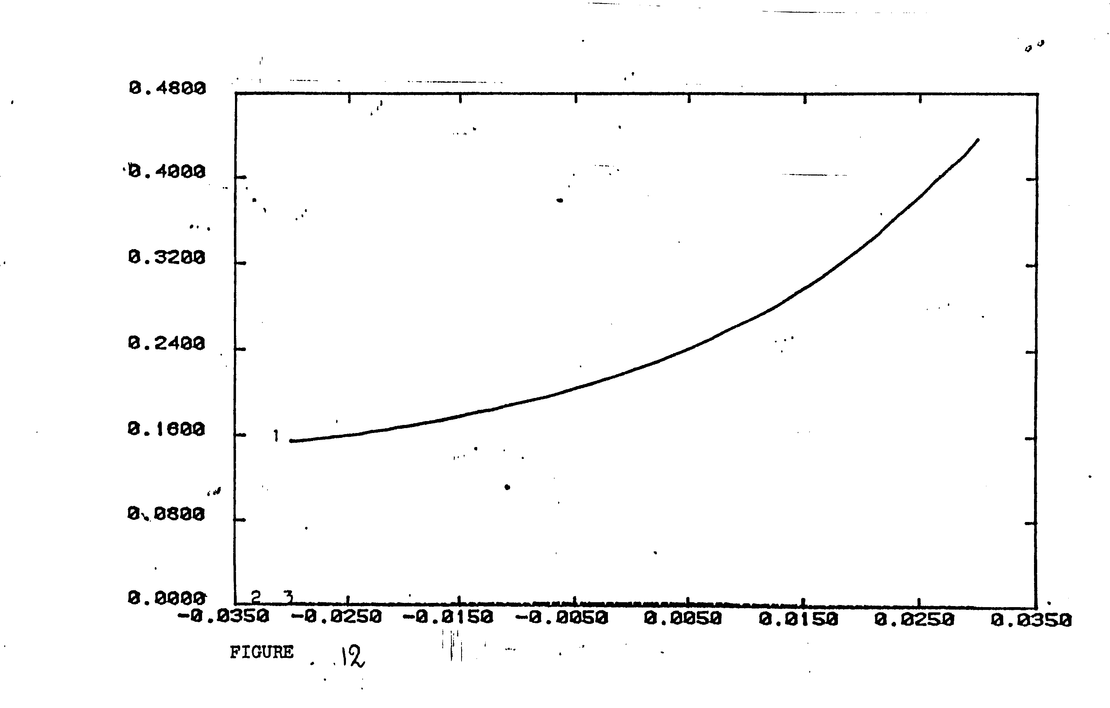

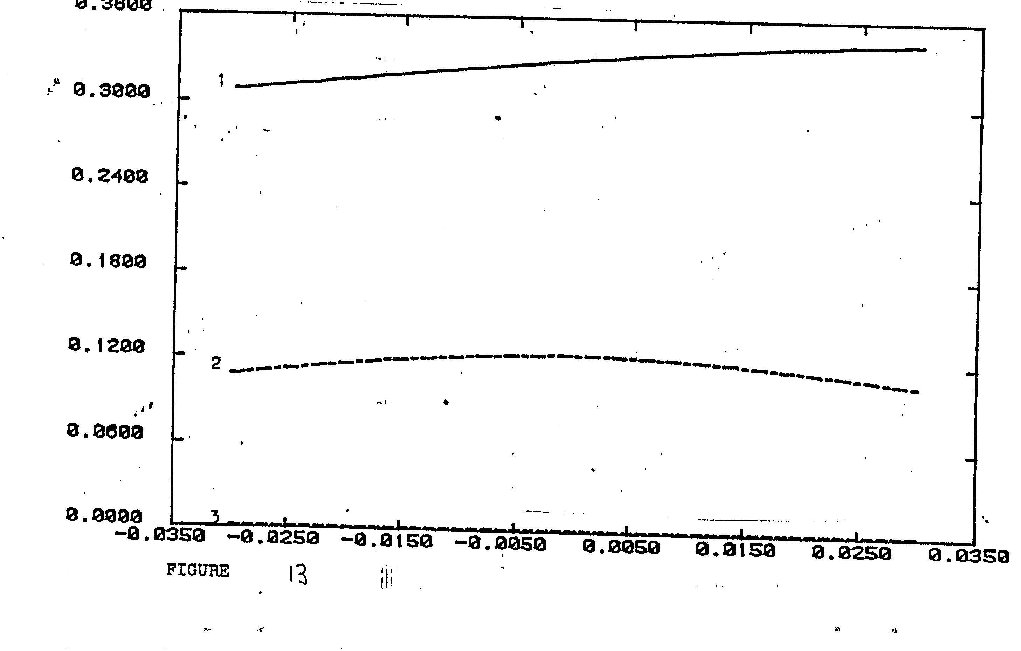

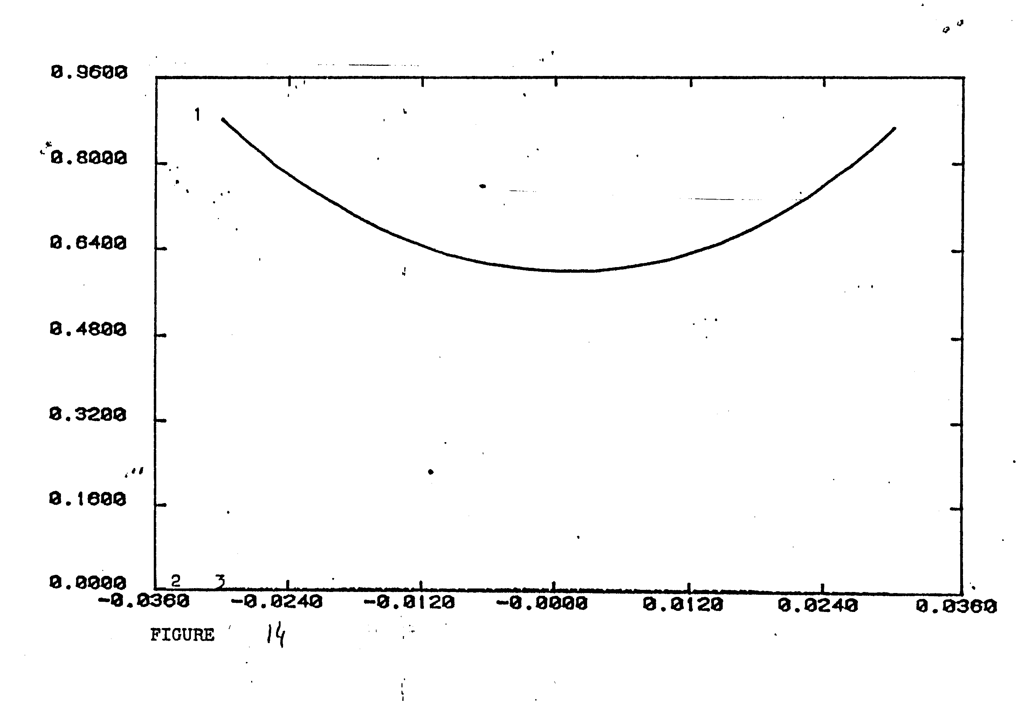

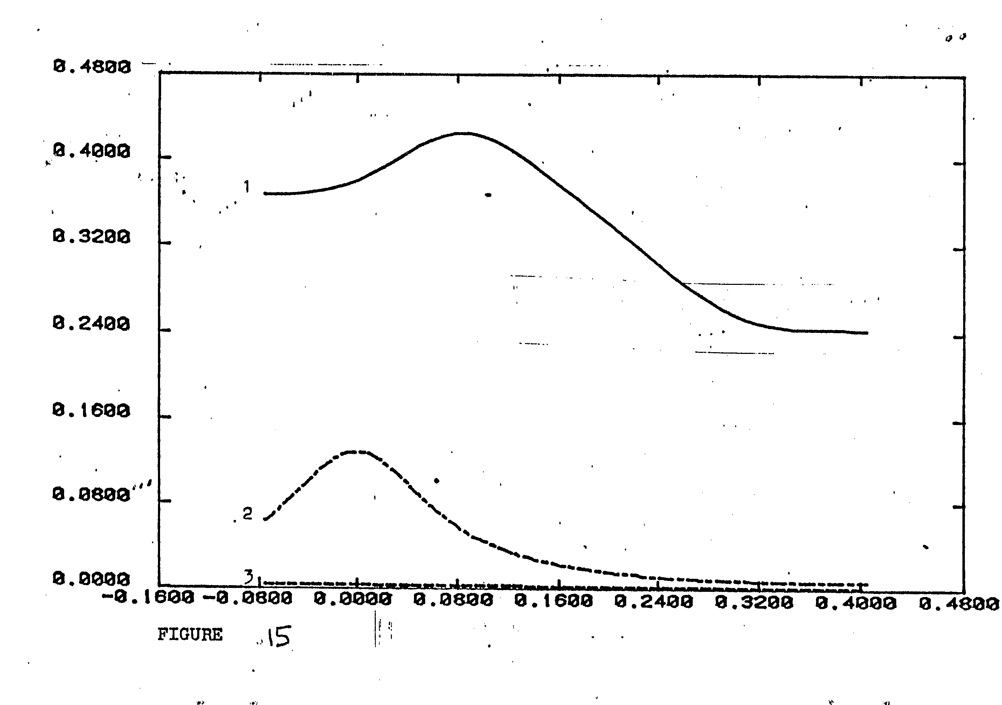

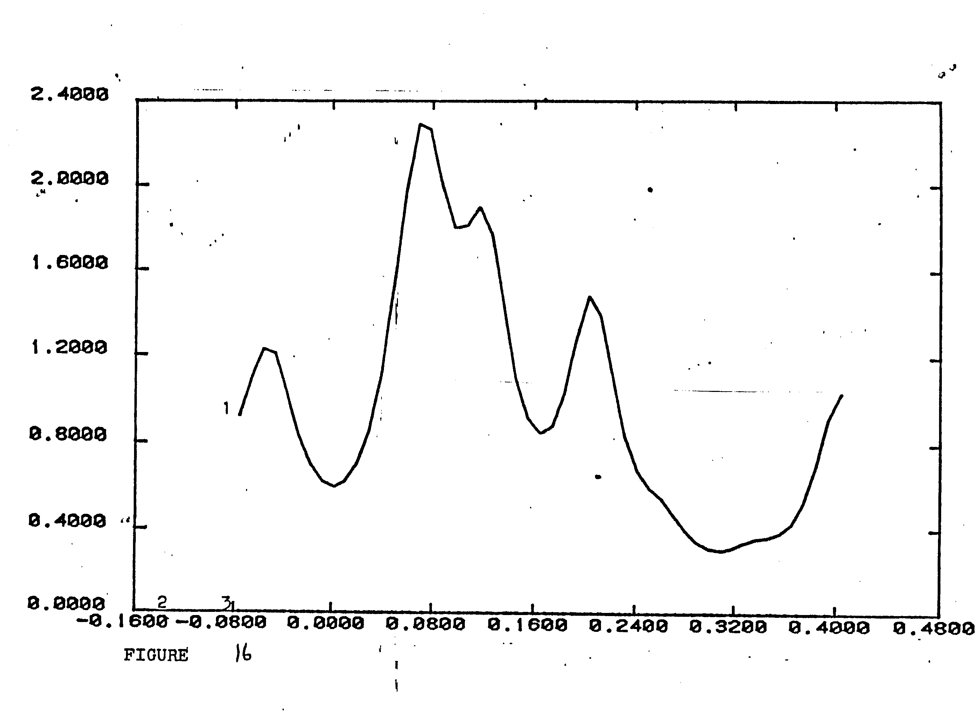

The results are presented in Figs. 1 to 16, respectively, where the first 6 figures represent the total spectral region of interest.

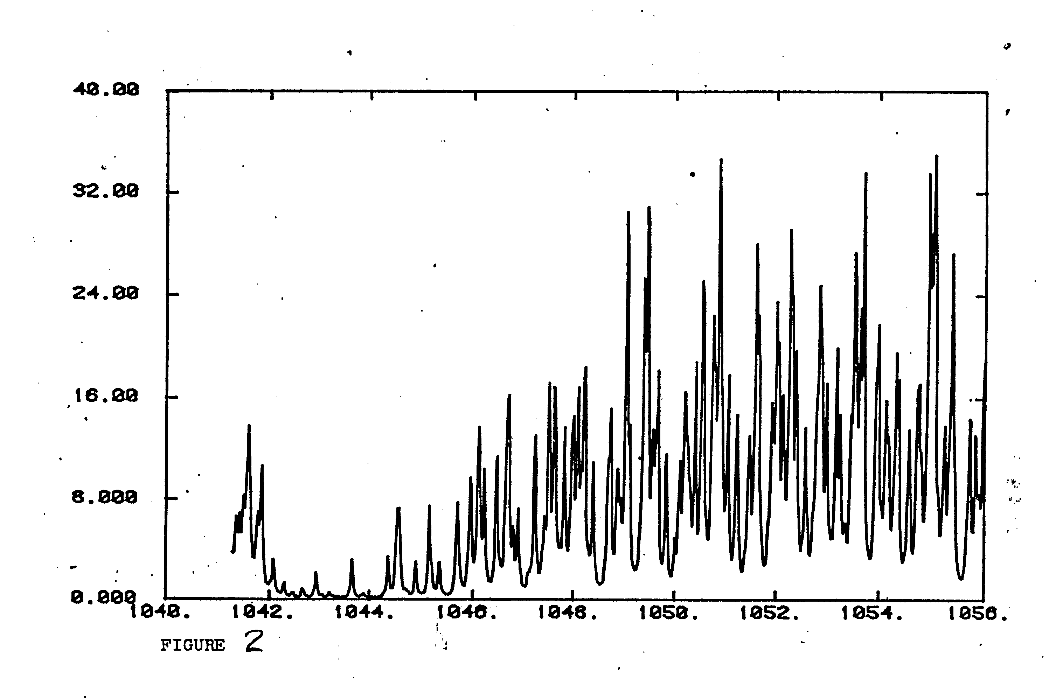

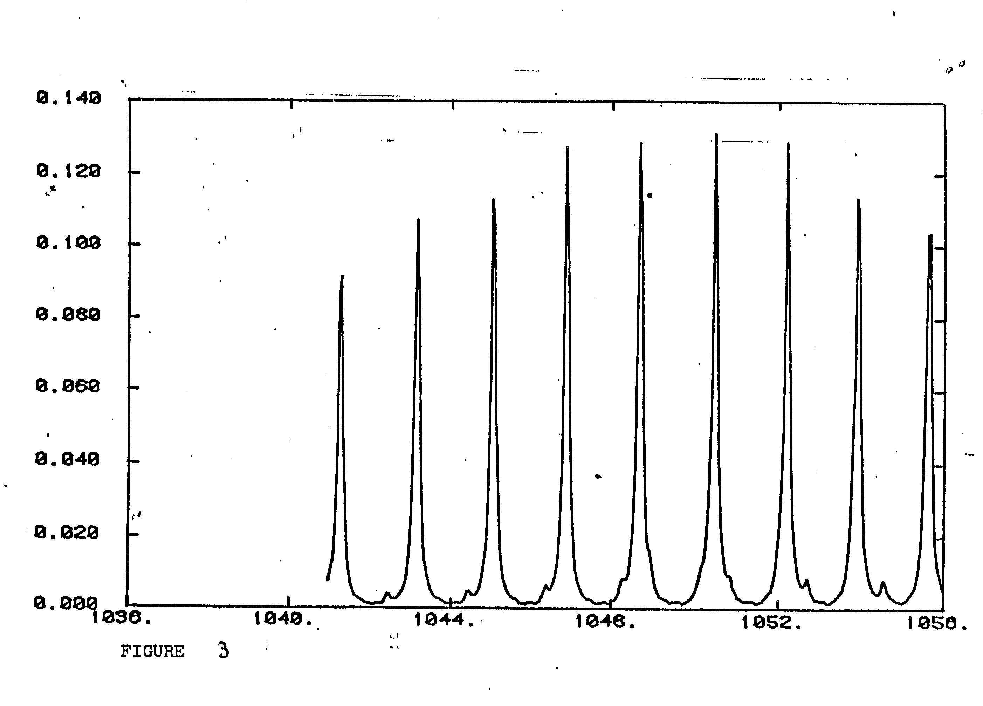

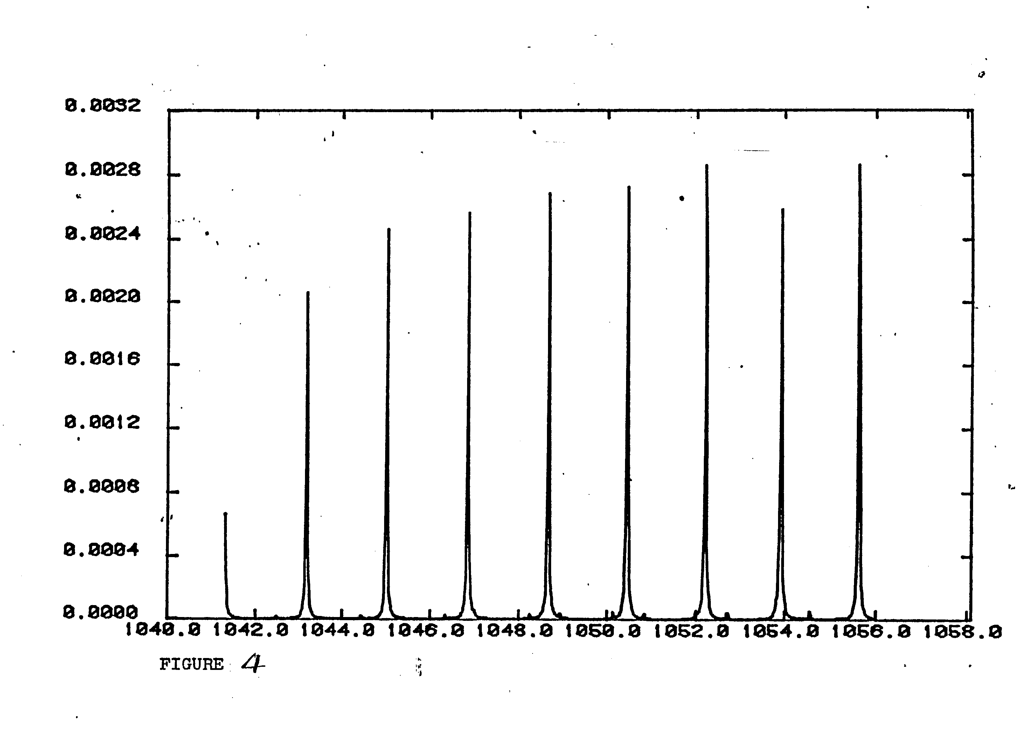

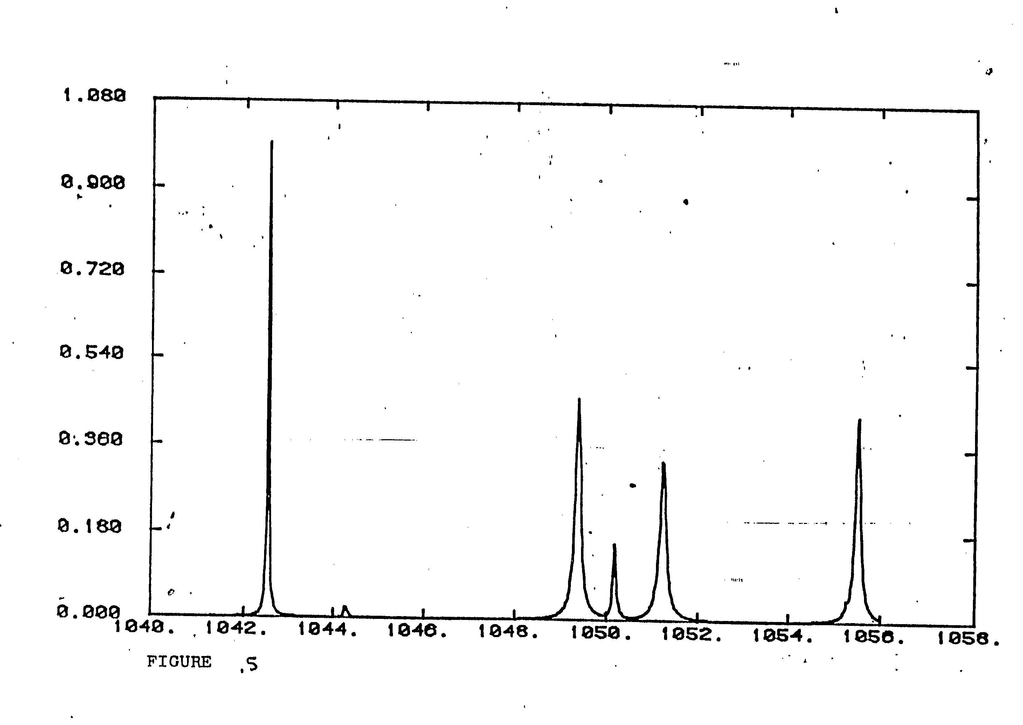

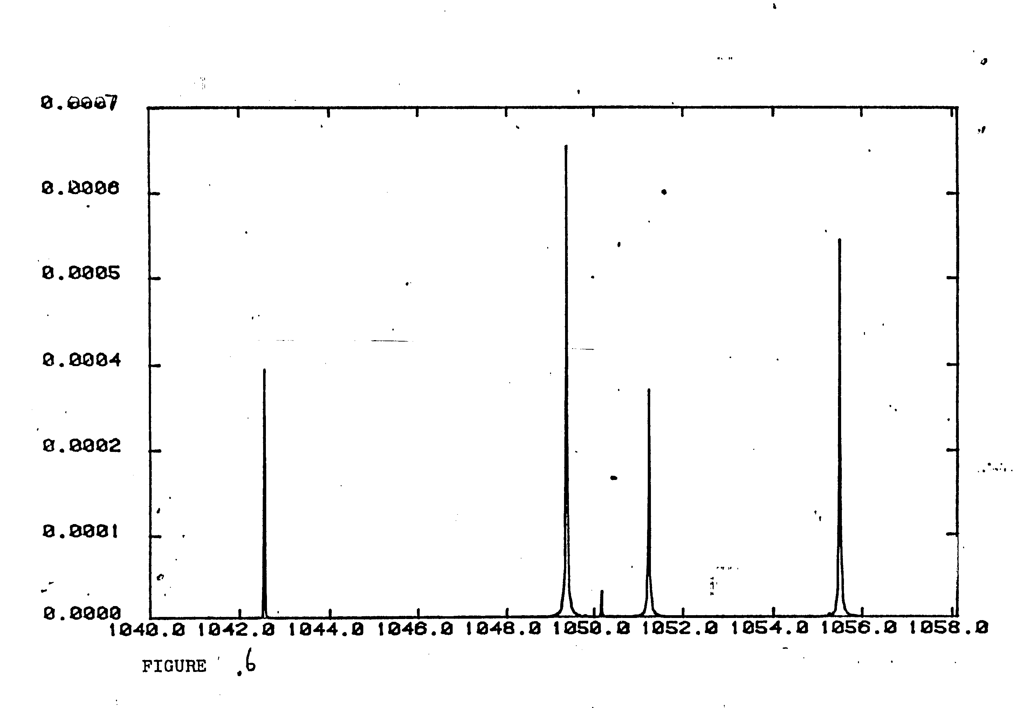

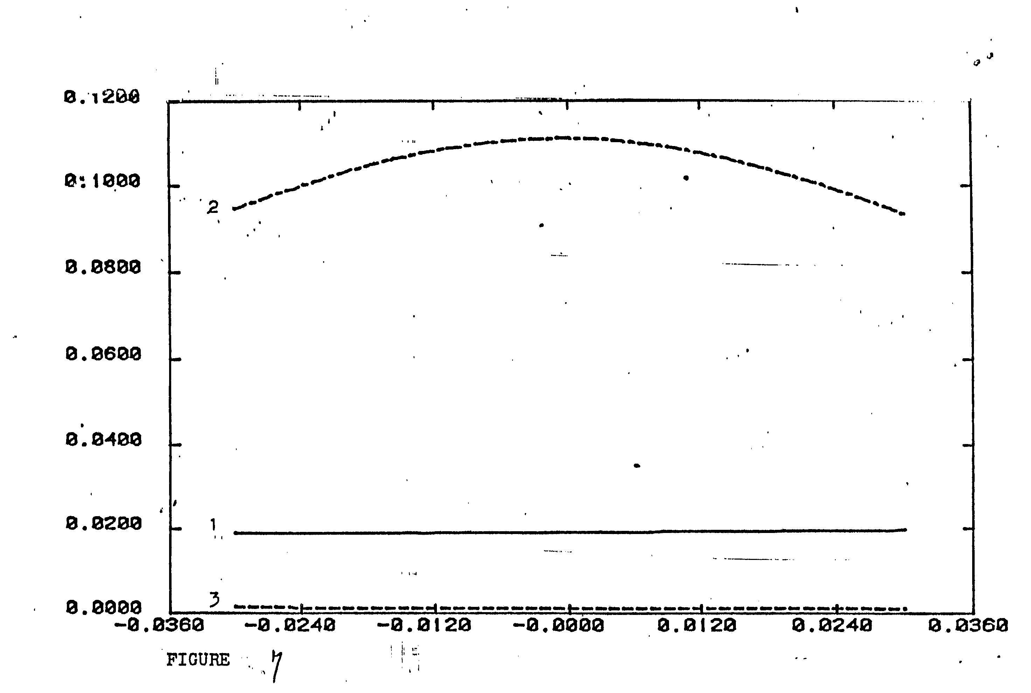

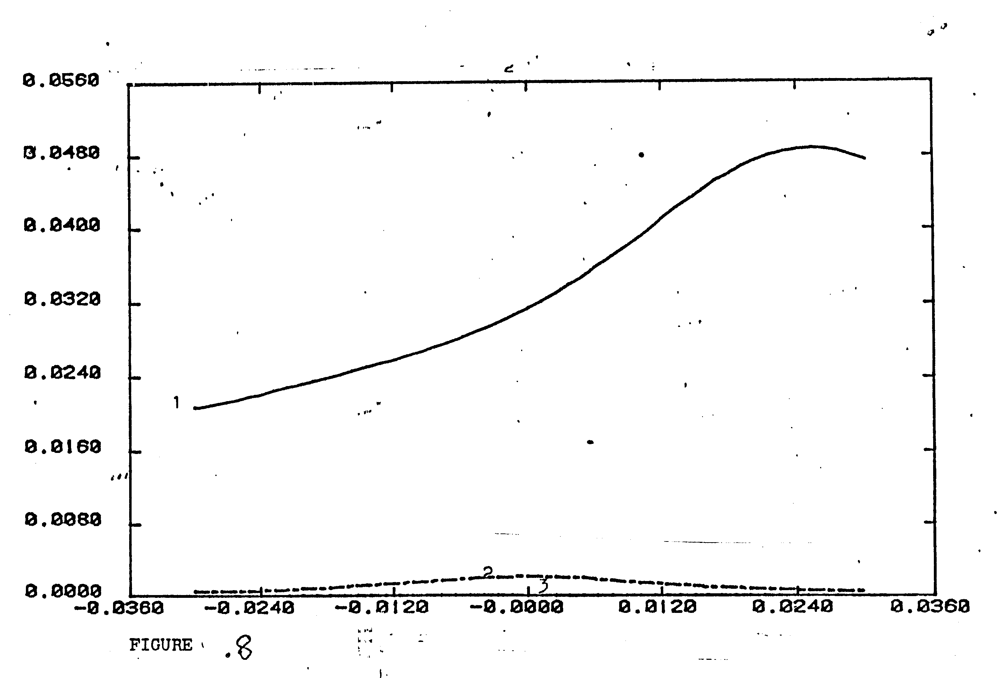

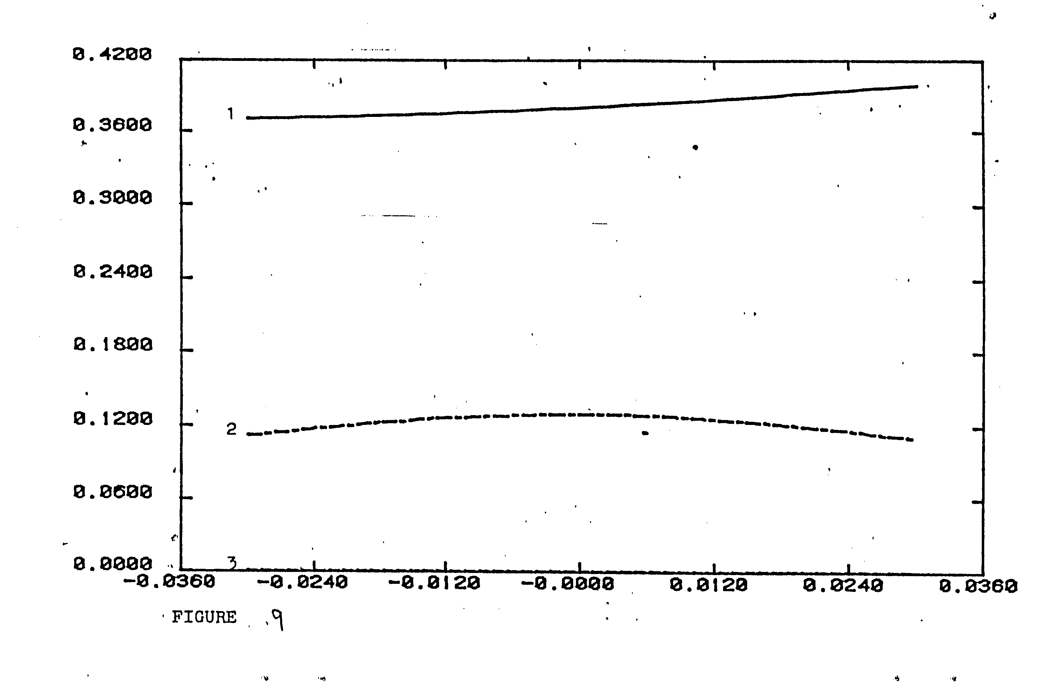

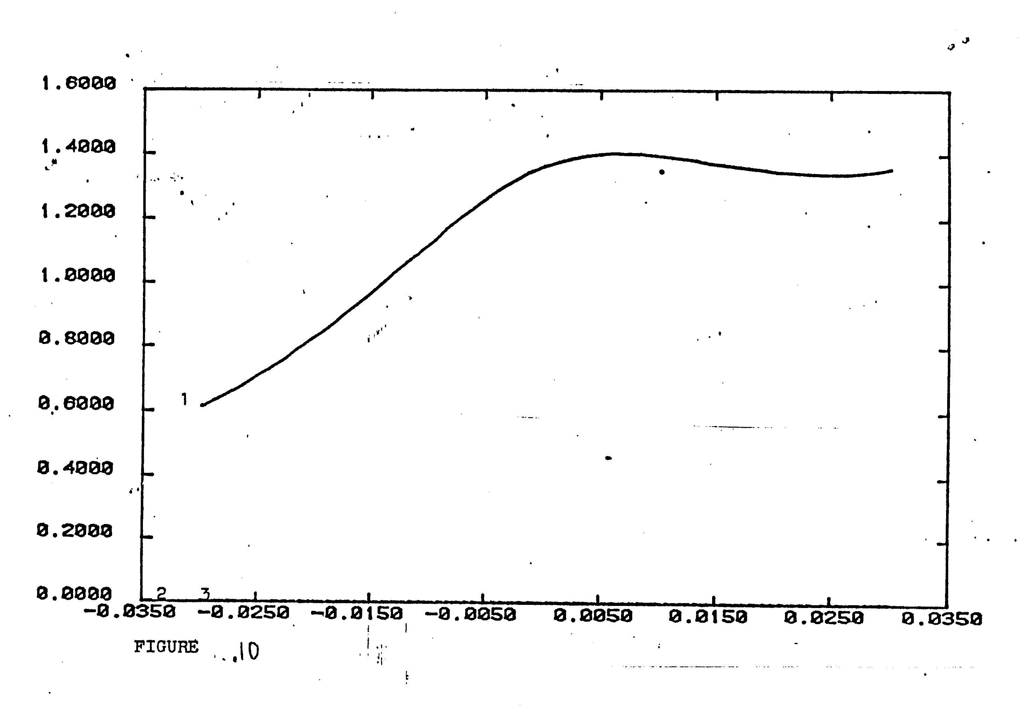

Fig. 1 and 2 contain the ozone spectra; it can be seen directly that at high altitude (Fig. 2) the structure becomes much more detailed compared to sea level (Fig. 1). The other figures show the spectra of the interference species CO2 (Fig. 3, 4) and H2O (Fig. 5, 6) under the same conditions. If we compare figures (1, 3, 5) the "ON" P14 = 1052.20 cm-1 and "OFF" P24 = 1043.16 cm-1 frequencies for ozone avoid the water vapour absorption and respectively maximize and minimize the ozone attenuation. At low pressure, (figures 2, 4, 6) the "ON" P10 = 1055.63 cm -1 and "OFF" P12 = 1053·92 cm-1 lines are recommended because the transmittivity is better in the higher region of the atmosphere.

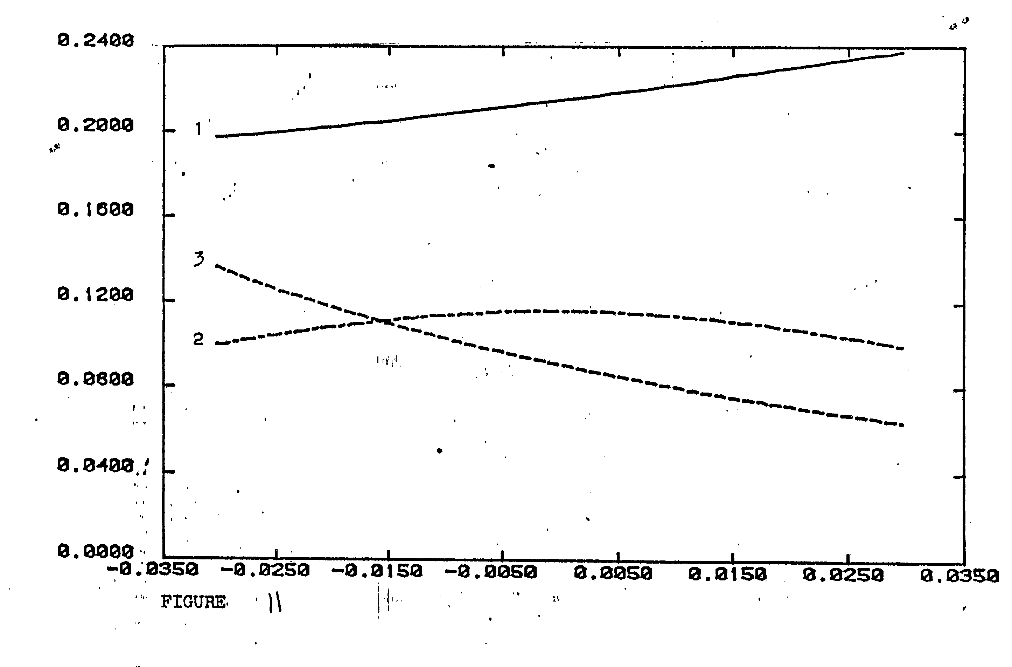

The figures 7 to 16 inclusive show in detail the spectra of all 3 species centred on the laser lines recommended above.
These give rise to the following remarks:
- the interference with carbon dioxide is naturally maximized
- the absorption coefficient is not maximized
- most lines are tuned to the wing of the absorption
  spectrum where the frequency stability requirements are
  highest.
- under resolution the absorption spectrum appears
  totally different at low and high altitudes (compare
  figures 15 and 16).
In particular maximum and minimum absorption wavelengths are
not the same as they are for the sea level measurements (see
Fig. 8, 10, 12, 14, 16), in the latter the interference species
like water vapour and carbon dioxide are more significant than
at an altitude of 11 km. However at the higher altitude the
choice of an absorption frequency for O3 is more restricted;
for example allowing a 5% variation in absorption coefficient,
the frequency stability needed at low altitude is approximately
$0.02$ cm$^{-1}$ (Fig. 7) and at high altitude approximately 0.002 cm
(Fig. 8).

It has been recommended that absorption allows the most
sensitive remote measurements of the concentration of
atmospheric constituents. The sensitivity or minimum measurable
concentration traces against range resolution, so that a total
column measurement along the path is more sensitive than a
range resolved measurement.

The performance evaluation of these Differential Absorption
Lidar (DIAL) sensors is discussed below.

Fig. 17 shows a schematic of a typical single ended DIAL
sensor. The apparatus shown consists of a receiver assembly
and a laser transmitter 1 in one location. If a hard target 3
to which the laser beam 5 is directed, intercepts the
transmitted light pulse 7 with power Po at a range $Z_0$ , then
the received power P is given by:

$$P = a\frac{\delta_T}{\pi} \times T_{abs}(z) \times \frac{P_0}{Z_0^2} \qquad [2.10]$$

where "a" is the receiver area and $T_{(z)}$ the atmospheric attenuation defined previously. In the infrared atmospheric attenuation can be expected to be primarily due to absorption rather than scattering. $\beta$ is the target backscatter coefficient.

An alternative to such a column content measurement is the use of an aerosol distributed target: the equation then takes the form:

$$P = a \, \beta_{(z)} \frac{c \Delta t}{2} \, T_{abs(V)} \frac{Po}{Z_0^2} \qquad [2.11]$$

Where $\frac{c \Delta t}{2}$ represents the range resolution. $\beta_{(z)}$ is the volumetric backscatter coefficient and in our infrared case mainly determined by the areosol backscatter, $c$ is the speed of light.

As indicated above a DIAL sensor compares the returns at two neighbouring frequencies to determine the concentration of some atmospheric species. Expressing the transmittance $T_{(V_2)}$ only for one absorbing specie, there results:

$$T_{(Vz)} = \exp \left[ \left( -2 \int_0^z \left( N_{(z)} \, x \, V_{(vz)} + \alpha_r (Vz) \right) dz \right] \qquad [2.12] \right.$$

where $N_{(z)}$ is the concentration (number density) of the absorber, $T_{(V_2)}$ the absorption cross section which depends on pressure and temperature and $\alpha_r (V_2)$ is a residual attenuation coefficient to take into account the effects of interfering other molecular species and scatter losses.

. If two light pulses are transmitted on the "ON" and "OFF" frequencies at $V_{oN}$ and $V_{oFF}$, the Lidar equation [2.11] and the transmittance expression [2.12] can be used to represent the ln ratio of the receiver signals as:

$$E_{(z)} = 2 \int_0^z N_{(z)} \, x \, V_{2,1}(z) dz + A_{(z)} + \beta_{(z)} + E_{(1)} \qquad [2.13]$$

$\sqrt{}_{2,1}(z)$ is the differential absorption cross section (DAC),

defined by $\sqrt{}_{2,1}(z) = \sqrt{}_{(V_{ON})} - \sqrt{}_{(V_{ON},z)}$

The terms $A_{(z)}, \beta_{(z)}, E_{(z)}$ and $E_{(1)}$ describe the remaining contributions of the other parameters in the lidar equation.

$$A_{(z)} = 2 \int_0^z (\alpha_r (V_{OFF}, z) - \alpha_r (V_{ON} z)) \, d z \qquad [2.14]$$

$$B_{(z)} = \ln \left[ \frac{\beta (V_{ON}, z)}{\beta (V_{OFF}, z)} \right] \qquad [2.15]$$

$$E_{(1)} = \ln \left[ \frac{E_{ON}/E_0}{OFF} \right] \qquad [2.16]$$

$$E = \ln \left[ \frac{E_{ON}}{E_{OFF}} \right] \qquad [2.17]$$

$E_{(1)}$ is the ln ratio of the transmitter signals.
For a simplified differential absorption lidar equation it is
assumed that the selected wavelengths are such that the terms
$A_{(z)}$, $E_{(1)}$ and $\beta_{(z)}$ are negligible so that eqn [2.12]

becomes:

$$T_{(z)} = \exp [- 2 N_{(z)} \sqrt{}_{2,1}(z) \cdot Z] \qquad [2.18]$$

and eqn [2.13] becomes:

$$E_{(z)} = 2 N_{(z)} \sqrt{}_{2,1}(z) \cdot Z \qquad [2.19]$$

In the above expression we assume the quantities $N_{(z)}$ and $\sigma_{2,1}(z)$ constant over the distance Z.

If we introduce two ranges $Z_1$ and $Z_2$ separated by a range increment $\Delta Z = (Z_2 - Z_1)$, the average concentration $\rho$ of the pollutant within $\Delta Z$ is then given by:

$$\rho = \frac{N_{\Delta z}}{\gamma} = \frac{1}{2 \Delta z \, \sigma_{2,1}(z) \, \gamma} \qquad [2.20]$$

where: $\Delta E = E_{(z+\Delta z)} - E_{(z)}$ represents the absorbance.

$N_{(\Delta z)} =$ the average density in the probe distance

$\gamma =$ number density of the molecules in the atmosphere.

Random errors arise from the S/N ratio of the LIDAR return and fluctuations in the residual absorption $A_{(z)}$, the backscattering $\beta_{(z)}$ for column measurements and the transmitted energy $E_{(t)}$. In addition systematic errors arising from the wavelength dependence of and uncertainties in the differential absorption cross section $\sigma_{2,1}$, contribute to the total error The random errors of the extinction coefficient in a DIAL measurement are limited by the relative error in the return power:

$$\left\langle \left(\frac{\Delta P_{oN}}{P_{oN}}\right)^2 \right\rangle \quad \text{and} \quad \left\langle \left(\frac{\Delta P_{oFF}}{P_{oFF}}\right)^2 \right\rangle \qquad [2.21]$$

If we assume as a worst case, that the uncertainty in the two measurements is equal and given by the SNR of the most attenuated signal, then

$$P_{oN}^2 = exp \cdot [-2 E_{(z)}] \cdot P_{oFF}^2$$

$$\left\langle (\Delta P_{oN})^2 \right\rangle = \left\langle (\Delta P_{oFF})^2 \right\rangle$$

$$\sigma_p^2 = \left(\frac{S}{N}\right)^{-2} = \frac{\left\langle (\Delta P_{oN})^2 \right\rangle}{P_{oN}^2} \qquad [2.22]$$

The total standard deviation $\sqrt{\phantom{}}_P$ in the extinction can be obtained by differentiation of eqn [2.19] and combining the result with the equations [2.17] and [2.22], whereafter the relative extinction error can be written as:

$$\frac{\Delta E_{(z)}}{E_{(z)}} = \left[\frac{1 + \exp(2 E_{(z)})}{E^2_{(z)}}\right]^{1/2} \times \left(\frac{S}{N}\right)^{-1} \qquad [2.23]$$

The relative extinction $\frac{\Delta E_{(z)}}{E_{(z)}}$ multiplied with the signal to noise ratio is depicted in Fig. 18. It illustrates a minimum value at $E_{(z)} = 1.1$ For a large extinction $E_{(z)} > 2$ the expression grows like $\frac{\exp(2 E_{(z)})}{E_{(z)}}$ while for a small extincion $E_{(z)} < 0.5$ the expression is proportional to $E^{-1}_{(z)}$

For a give relative error the minimum detectable gas concentration can be expressed using eq n. [2.19] The minimum detectable concentration (at $\Delta E_{(z)}/E_{(z)} = 1.1$) for a content measurement is given by:

$$\rho_{min} = \frac{N}{\sigma} = \frac{1.1}{2\sqrt{}_{2,1}\Delta z \sigma} \approx \frac{1}{2\sqrt{}_{2,1}\Delta z \sigma} \qquad [2.24]$$

By using the time of flight of the transmitted laser pulse, we can determine the range of a particular backscatter. As in eqn. [2.23] we derive the range resolved relative extincion error, under the assumption that $\frac{\langle(\Delta P)^2\rangle}{P^2} = \left(\frac{S}{N}\right)^{-2}$ is identical in both channels for the "OFF" resonance wavelength so that:

$$\left(\Delta E_r / E_r\right)^2 = \left(\frac{d E_{(z+\Delta z)}}{E_{(z+\Delta z)}}\right)^2 + \left(\frac{d E_{(z)}}{E_{(z)}}\right)^2 =$$

$$\frac{[1 + \exp(2 E_{(z+\Delta z)})]}{E^2_{(z+\Delta z)}} \times \left(\frac{S}{N}\right)^{-2} + \frac{[1 + \exp(2 E_{(z)})]}{E^2_{(z)}} \times \left(\frac{S}{N}\right)^{-2} \qquad [2.25]$$

- 13 -

A general discussion is complex and therefore it is assumed that all absorption takes place within the range cell i.e. $\exp(2E_{(z)}) = 1$ and $E_{(z)} = E(z+\Delta z)$ so that the two "OFF" resonance extinctions and the near range "ON" resonance extincion are identical then

$$\frac{(\Delta E_r)^2}{E_r} = \frac{[3 + \exp(2\bar{E}_{(z+\Delta z)}]}{E^2_{(z+\Delta z)}} \times \left(\frac{S}{N}\right)^{-2} \qquad [2.26]$$

which is minimized for :

$$\left(E_{(z+\Delta z)} - 1\right) \cdot \exp\left(2\bar{E}_{(z+\Delta z)}\right) = 3 \qquad [2.27]$$

i.e.

$$\bar{E}(z+\Delta z) = 1.3 \qquad [2.28]$$

The physical reason for the minimum in the extinction error is, if the absorbence is too strong ($E_{(z+\Delta z)} >> 1.3$) then the accuracy in the return signal is too weak, whereas if the differential absorption coefficient (DAC) is too weak ($E << 1.3$) then the absorbence is too weak and cannot be observed with sufficient precision. Optium performance therefore asks for on-line adjustment of the differential absorption coefficient. For a spaceborne DIAL system computer modelling exercises on O3, NH3 and H2O have shown that the infrared systems necessitate a GHz tuning capability.

The term $A_{(z)}$ in eqn [2.13] is a combination of absorption interference and scattering attenuation coefficient. The absorption interference of parasitic atmospheric species has been discussed above. The scatter attenuation can vary between two wavelengths but is normally negligible at 10 $\mu$ m.

The differential nature of the DIAL technique can cause large errors $\simeq$ 10% if the target backscatter coefficients for the "ON" and "OFF" resonance frequency differs. The variations in aerosol backscatter coefficients depend on the aerosol size distribution and relative humidity. For range resolved measurements with a constant humidity over the range cell this does not matter as wavelength-dependent variations are automatically ratioed out. On the other hand it is significant for column measurements.

If the "ON" and "OFF" -resonance frequencies of the transmitter are not formed at the same time and do not necessarily follow the same superimposed path, the above mentioned inhomgenities cause additional errors. See Fig. 17 b in which 9 represents the target, Z = the range, $\Delta Z$ is the range element, $A_l$ is the receiver area, $B_t$ is the transmitter area, the full line represents the path of the "ON" wavelength and the broken line, the "OFF" wavelength.

Next to the temporal fluctuations caused by any of the above efforts, there are spatial variations caused by refractive turbulence or misalignment of the lasers which result in the probing of different atmospheric target volumes for the two transmitted wavelengths.

A sensitivity estimate can be calculated unlike the system noise sources previously mentioned and the results are presented in table 2.3 below. Table 2.3 uses the values expressed in tables 2.2 and 2.1 given hereinbelow.

If we ignore the three former named noise sources, the speckles from the incoherent backscattering of the transmitted laser beam are the cause of large statistical fluctuations of the intensity in the backscattered light. In a direct detection system the intensity fluctuations are averaged by the detector but there is an additional optical background and electronic noise, which is dominant in direct detection systems. The normalized variance of the return power about the short term mean value for N output pulses in the direct detection case is:

$$\sqrt{P_o} = \frac{1}{N\delta_o^2} \qquad . \qquad [2.29]$$

For direct detection at I.R. wavelengths:

$$\delta_o = \frac{P}{((NEP)_D \sqrt{B})} \qquad [2.30]$$

where P is the return power, B is the receiver bandwidth, (NEP) is the noise equivalent power for direct detection.

In a heterodyne system we assume m independent observations of a speckle pattern target with n taken as the mean number of received photons which are detected within a single lidar measurement. The normalized variance $\sqrt{P_H}^2$ of the return about this short term mean value for N output pulses in the heterodyne case is:

$$\sqrt{P_H}^2 = \frac{1}{mn}(1 + m/n)^2 = \frac{1}{m}(1 + \frac{1}{\delta_H})^2 \qquad [2.31]$$

Here it is assumed that the measurement noise is (optimally) dominated by the background source which is the shot noise of the local oscillator. We can define:

$$\delta_H = \quad n/m \quad = \zeta np/(hr(mB)) \qquad [2.32]$$

where $S_H$ is the carrier to noise ratio (CNR) for a single speckle measurement of the return power P. $\zeta$ as the photodetector quantum efficiency and hv the photon energy. But in the heterodyne case B is the range radiation bandwidth and at I.R. wavelengths is the noise equivalent power given by:

$$(NEP)_H \simeq \frac{h\nu}{3} \qquad\qquad [2.33]$$

In this case the speckle averaging is done electronically.

If eqn. [2.31] is differentiated with respect to m it will show that the optimum choice of n=m.   However, the data processing cannot cope with rapidly changing speckle targets, so we assume a maximum value of m = 20.  The minimum value for m is of course 1. Then for m = n  eqn. [2.31] becomes:

$$\bar{V}_{\rho_H}^2 = \frac{4}{nN} \qquad\qquad [2.34]$$

The feasibility of lidar measurements is largely determined by the laser pulse energy, we conservatively assume this to be 100 milliJoules with a pulse repetition frequency (PRF) of 50Hz., (see Table 2.1).  The system performance can be quantified in terms of a limiting range for which we assume the following:

-calculation suitable as a guide for absorbers approximately uniformly distributed through the atmosphere e.g. H2O vapour (CO2), etc.

$$E_{(z)} \simeq \frac{\bar{V}_z}{\bar{V}_{z,1\,opt}} \simeq \frac{P}{P\,min} \qquad\qquad [2.35]$$

$E_{(z)}$ represents the column content measurement and should be replaced with $\bar{E}_{(z)}$ for a range resolved measurement.

From the equations [2.12], [2.19] and [2.20] the transmittance is given by:

$$T_{(\nu_2)} = exp[-2N_{(z)}\bar{V}_{z,i}^{(z)}/_o] = exp\,[\,\Delta\,E\,\frac{z_o}{\Delta z}\,] \qquad\qquad [2.36]$$

- the parameters for the Lidar equation are displayed in table 2.2.

- It is not very likely that all return powers are measured with the same relative extinction error.  It is much more likely that the "OFF" resonance returns are much less than the "ON" resonance lines so that the total relative extinction

error is $\varepsilon \Gamma_P \doteq \dfrac{2 \langle \Delta P(z+\Delta z) \rangle}{P(z+\Delta z)}$

For the calculation we assume that the total relative extinction error is

$$\varepsilon \Gamma_P \simeq \dfrac{1.5 \langle (\Delta P(z+\Delta z)) \rangle}{P(z+\Delta z)}$$

Combining the eqns [2.11] [2.29] [2.30] and [2.35], gives the following relation for the limiting range Z for direct detection:

$$\ln\left(\dfrac{\frac{1}{2}\alpha\beta(z)(c\Delta t)P_0}{z_0^2}\right) - \Delta E \dfrac{z_0}{\Delta z} = \ln\left(\dfrac{(NEP)_0 \sqrt{B_N}}{\sqrt{P_0}}\right) \qquad [2.37]$$

The speckle count relation for m=n is obtained by combining [2.34] and the relations [2.31] [2.32] [2.33] to give:

$$\ln\left(\dfrac{\frac{1}{2}\alpha\beta(z)(c\Delta t)P_0}{z_0^2}\right) - \Delta E \dfrac{z_0}{\Delta z} = \ln\left(\dfrac{\tau(NEP)_H \beta}{N \sqrt{P_H}^2}\right) \qquad [2.38]$$

similarly for a speckle count given by m = n i.e. m = 1,20 where we use eqn [2.39] in place of eqn [2.31].

$$\ln\left(\dfrac{\frac{1}{2}\alpha\beta(z)(c\Delta t)P_0}{z_0^2}\right) - \Delta E \dfrac{z_0}{\Delta z} = \ln\left(\dfrac{m(NEP)_H \beta}{\sqrt{P_H}\sqrt{m\Delta t}-1}\right) \quad [2.39]$$

TABLE 2.1 Lidar parameters.

| Transmitter mode | direct | heterodyne |
|---|---|---|
| P (Joules) | 0.100 | 0.100 |
| __(m s r$^{-1}$) | 10$^{-7}$ | 10 |
| P.R.F. (Hz) | 50 | 50 |
| | | |
| Receiver mode | | |
| A (m ) | 0.r | 0.5 |
| T (%) | 1 – 10 | 1 – 10 |
| (NEP)(W), B = 1.5 MHz | 1.2 x 10 | 1.2 x 10 |

The results for a homogeneously distributed absorption concentration are represented in table 2.3 for direct and a heterodyne detection at different absorbence levels, range resolved S/N error limits, integration times and with a fixed range resolution of 300 m.

TABLE 2.2 100 mJ CO2 laser DIAL ranging limit dependence on, absorbence, integration time, range resolution and S/N error limit (Lidar parameters are tabulated in table 2.1)

Limiting range (km)*

| S/N error limit | absor- bance over range res. | 1 sec. inter- gration | 10sec. inter gration | H)etterodyne D) irect |
|---|---|---|---|---|
| 1% | <1.5 | N/A | N/A | H |
| 1% | 0.1 | 4.3 | 5.8 | D |
| 1% | 0.3 | 2.6 | 3.4 | D |
| 1% | 0.6 | 1.7 | 2.1 | D |
| 1% | 1.0 | 1.2 | 1.4 | D |
| 10% | 0.1 | 24.7 | 30.4 | H |
| 10% | 0.3 | 10.9 | 13.1 | H |
| 10% | 0.6 | 6.0 | 7.1 | H |
| 10% | 1.0 | 3.6 | 4.3 | H |
| 10% | 0.1 | 7.7 | 9.7 | D |
| 10% | 0.3 | 4.2 | 5.0 | D |
| 10% | 0.6 | 2.5 | 3.0 | D |
| 10% | 1.0 | 1.7 | 2.0 | D |

* With a fixed range resolution of 300 m. In table 2.3 there is no heterodyne detection possible with S/N error limit of 1% due to inadequate speckle averaging $\left( \sqrt{P_H} > \frac{1}{\sqrt{m \, N}} \right)$

The absorbence can be calculated from the extinction. These absorption values are used together with the AFCRL line parameter compilation to represent the tabulated DAC values in table 2.2 Finally the relative sensitivity error E/E and equation [2.24] can be used to express the sensitivity error of the corresponding DAC values as ppb per range cell of 300 metre length (see table 2.2)

TABLE 2.3    DETECTABLE ATMOSPHERIC SPECIES USING CO2 LASERS.

| Name | Formula | Wave-length ( ) | DAC* atm cm | Sensi-tivity** ppb/300 m. | Ref. |
|------|---------|---------|---------|---------|------|
| Ammonia | NH3 | 9.2 | 56 | 2.8 | 2.6 |
| Benzene | C6H6 | 9.6 | 1.0 | 157 | 2.4 |
| Choroprene | C4H5C1 | 10.3 | 8 | 19.8 | 2.4 |
| Ethylene | C2H4 | 10.5 | 28 | 5.7 | 2.5 |
| Freon 11 | CC13F | 9.2 | 11 | 14.1 | 2.4 |
| Freon 12 | CC12F2 | 9.2 | 7.6 | 20.7 | 2.4 |
| Hydrazine | N2H4 | 10.8 | 4.3 | 37.6 | 2.7 |
| Methanol | CH3OH | 9.7 | 19.7 | 8.1 | 2.7 |
| Ozone | 0.3 | 9.6 | 5.5 | 28.6 | 3.3 |
| Trethy-lamine | (C2H5)3N | 9.6 | 0.5 | 314 | 2.8 |
| Trichloro-ethylene | C2HC13 | 10.5 | 3.1 | 50.2 | 2.4 |
| Vinyl-chloride | C2H3C1 | 10.6 | 6.5 | 24.2 | 2.4 |

*DAC stands for Differential Absorption Coefficient between quoted line and some adjustable reference line.
**For 1% error in overall return power measurement (see below).

From the arguments presented in the preceding sections the continuously tuneable source is more versatile than a discretely tunable laser, since continuous tuning provides the freedom:

a.  tune for an optimum absorption to obtain the best trade off between sensitivity and range.

b.  choose the "ON" and "OFF" tuned wavelengths away from other species like water vapour and in particular carbon dioxide interference, since the contribution of the carbon dioxide cannot be excluded with a line tuneable $CO_2$ source (except with isotopic mixtures).

c. At high altitudes you have the option to tune the frequency of the high pressure laser to that part of the absorption spectrum where the frequency ·stability requirements· are so demanding (the wings are far more sensitive than the maximum and minimum values).

d. Measure the $CO_2$ concentration with two neighbouring frequencies which, for the continuously tuneable laser increases the available DAC by a factor of at least two.

e. Be able to cope with the related absorption pressure shift for the higher regions of the atmosphere.

In accordance with the present invention, a column measurement in the atmosphere using the DIAL technique for the concentration of a pollutant constituent, is effected by use of the equation "A" as follows:-     $P1 = 2N\ (\sigma\ \text{OFF} -\sigma_{ON})Z;$
$P2$

where N is the number of density of pollutant in the sample, $(\sigma\ \text{OFF}-\sigma\ \text{On})$ is the difference in the absorbence per cross-section per molecule of the constituent at the "OFF" DIAL frequency and the "ON" DIAL frequency respectively, and 2 is the range of the column.

Figure 19 is a diagrammatic illustration of the determination. Referring to this figure, 21 indicates, in this instance, a high-pressure, multi-atmosphere, continuously tunable pulsed gas emitting the "ON" and "OFF" frequencies simultaneously and along the same path, and 23 represents the atmospheric column in which the concentration of pollutant is to be determined. The reflected laser beam indicated purely by arrow 25 is detected by a suitable detector (not shown).

Known data permit a value for $(\sigma\ \text{OFF} - \sigma\ \text{ON})$ to be estimated and this enables a value for "N" to be calculated on obtaining the first value for $\ell n\ \dfrac{P1}{P2}$ by detecting the returned laser beam where P1 is the power of the reflected beam at the !"OFF" frequency and P2 is the power of the reflected beam at the "ON" frequency; the "OFF" and "ON" frequencies initially

0 270 862

- 21 -

being chosen arbitrarily. The value of N thus calculated is then assumed to be correct and is then regarded as a constant in equation "A". The "OFF" and "ON" frequencies are then shifted and the term ($\sqrt{}$ OFF $- \sqrt{}$ ON) calculated from equation A. Several more determinations may and usually will be made at still different "ON" and "OFF" frequencies until the value for ($\sqrt{}$ OFF $- \sqrt{}$ ON) becomes constant or is clearly approaching a constant value. That value is then taken to calculate "N" using the equation "B" as follows:- 2N . ($\sqrt{}$OFF $- \sqrt{}$ ON) .Z = 1.1; the value of 1.1 being that of the parameters on the left hand side of the equations at optimum "ON" and "OFF" frequencies at the given output power of the or each laser used. Since the term ($\sqrt{}$OFF$- \sqrt{}$O N) has been optimised, it follows that likewise so has the value of "N".

It will be understood that each determination of the parameter may be the average of a plurality of, say, 10, shots of the laser or lasers concerned.

In the case of a range resolved determination, equation "B" becomes :-

2N ($\sqrt{}$ OFF $- \sqrt{}$ ON) x$\Delta$Z = 1.3, but the same procedure is followed.

It will be understood that the above procedure could be used to determine one of a parameters other than "N" by use of the specified relationship.

CLAIMS

1/ A method of effecting a determination of a parameter (hereinafter called the first parameter) of a medium the absorbence or reflection of which in respect of the laser beam is indicative of the value of the first parameter and is most indicative of that value at a particular laser output characteristic, that is, output power and/or frequency; the first parameter along with a further parameter the true value of which indicates the optimum characteristic of the laser output, being indicative of the power of the reflected laser beam, characterised in that, a value is assumed for said further parameter and a laser operation effected to permit a value for the first parameter to be calculated; thereafter, using the calculated value of the first parameter as an assumed correct value, effecting a plurality of laser operations at different laser output characteristics and re-calculating the further parameter after each operation until a constant or near constant value is achieved, and then using that value of the further parameter to recalculate the first parameter to give a final value thereof on the assumption that said valve of said further parameter is that achieved by the optium laser output.

2/ A method according to claim 1, employing the DIAL technique, for remotely determining a parameter (being the first parameter) of an atmosphere comprising a constituent the degree of absorbence of which in respect of the laser beam is indicative of the value of that parameter, characterised in that, the determination is effected by reference to the relationship:

$$\ell_n \frac{P\ OFF}{P\ ON} = 2N\ (\measuredangle OFF - \measuredangle ON)\ x\ Z$$

in order to establish the assumed correct value of the first parameter and subsesquent values of the term $(\gamma$ OFF $- \measuredangle$ON) being the further parmaeters, and the relationship:-

$$2N(\measuredangle \text{OFF} - \measuredangle \text{ON}) \times Z = 1.1$$

for a column content determination; and

$$2N(\measuredangle \text{OFF} - \measuredangle \text{ON}) \times \triangle Z = 1.3$$

for a range resolved or absorbence cell determination, in order to establish the final value of said first parameter: wherein:-

$$\frac{\left[1 + exp\left(2E_{(z+\triangle z)}\right)\right]}{E^2_{(z+\triangle z)}} \times \left(\frac{S}{N}\right)^2 + \frac{\left[1 + exp\left(2E_{(z)}\right)\right]}{E^2_{(z)}} \times \left(\frac{S}{N}\right)^{-2} = 0 ,$$

$\measuredangle$ OFF; $\measuredangle$ ON $=$ the absorbence cross section for one molecule of the constituent at the respective "OFF" and "ON" DIAL frequencies;

E $=$ the extinction or absorbance of the constituient concerned

N $=$ the number of molecules of the constituent in the sampled atmospheric volume; and

Z  is the range and $\triangle$ Z is the range movement or cell dimension in the direction of the laser beam.

3/  A method according to claim 2, charactrised in that, "N" is the first parameter and "$\gamma$" said further parameter.

4/  A method according to any of the preceding claims, characterised in that a single laser is employed; the single laser being a continuously tunable, high-pressure multi-atmosphere laser.

FIGURE .1.

FIGURE 2

FIGURE 3

0 270 862

FIGURE 4

FIGURE 5

FIGURE 6

0 270 862

FIGURE 7

0 270 862

0 270 862

FIGURE .8

FIGURE 9

FIGURE 10

FIGURE 11

0 270 862

FIGURE 12

FIGURE 13

FIGURE 14

FIGURE 15

0 270 862

FIGURE    16

0 270 862

Fig 17a

Fig 17b

0 270 862

Fig 18

Fig 19